# EUROPEAN PATENT APPLICATION

(11) **EP 4 672 824 A1**
(43) Date of publication of application: **31.12.2025**
(21) Application number: 24781315.7
(22) Date of filing: 29.03.2024
(51) Int. Cl.: H04W 48/16, H04W 8/00, H04W 4/80, H04W 76/14, H04W 76/15, H04W 56/00, H04W 84/12

(54) **METHOD AND DEVICE FOR PERFORMING WI-FI AWARE COMMUNICATION IN CLUSTER**

(30) Priority: 31.03.2023 KR 20230043158
(71) Applicant: Samsung Electronics Co., Ltd., Suwon-si, Gyeonggi-do 16677 (KR)
(72) Inventor: OH, Hyunseob, Suwon-si Gyeonggi-do 16677 (KR); KIM, Junsung, Suwon-si Gyeonggi-do 16677 (KR); SEO, Seungbeom, Suwon-si Gyeonggi-do 16677 (KR); JUNG, Buseop, Suwon-si Gyeonggi-do 16677 (KR); CHOI, Junyoung, Suwon-si Gyeonggi-do 16677 (KR); HAN, Sehee, Suwon-si Gyeonggi-do 16677 (KR)
(74) Representative: HGF
(86) International application number: PCT/KR2024/004085
(87) International publication number: WO 2024/205325

(57) **Abstract**

An operation method of an electronic device performing Wi-Fi Aware communication, according to one embodiment of the present disclosure, may comprise the operations of: transmitting a Bluetooth Low Energy (BLE) advertisement message and activating a Wi-Fi Aware module of the electronic device; checking whether the electronic device is a Wi-Fi Aware device of a first type or a Wi-Fi Aware device of a second type; checking the type of a cluster the electronic device intends to join; and performing a discovery procedure on the basis of the type of the electronic device and the type of the cluster.

## Description

### [Technical Field]

The disclosure relates to a method for Wi-Fi aware communication between electronic devices in a cluster.

### [Background Art]

The Internet is evolving from the human-centered connection network by which humans create and consume information to the Internet of Things (IoT) network by which information is communicated and processed between things or other distributed components. Another arising technology is the Internet of Everything (IoE), which is a combination of the Big data processing technology and the IoT technology through, e.g., a connection with a cloud server. Implementing the IoT requires technical elements, such as sensing technology, a wired/wireless communication and network infrastructure, service interface and security technologies. A recent ongoing research for thing-to-thing connection is on techniques for sensor networking, machine-to-machine (M2M), or machine-type communication (MTC).

In the IoT environment may be offered intelligent Internet Technology (IT) services that collect and analyze the data generated by the things connected with one another to create human life a new value. The IoT may have various applications, such as the smart home, smart building, smart city, smart car or connected car, smart grid, health-care, or smart appliance industry, or stateof-art medical services, through conversion or integration of conventional information technology (IT) techniques and various industries.

Wi-Fi CERTIFIED Wi-Fi Aware^{™} (Wi-Fi Aware) is a technology that extends the capabilities of Wi-Fi by enabling rapid discovery, connection, and data exchange with other Wi-Fi devices without the need for traditional network infrastructure, Internet connection, or GPS signals. Wi-Fi aware may provide the function of enabling a mutual search and direct connection between devices even without any other type of connection. Wi-Fi aware may also be referred to as neighbor awareness networking (NAN).

### [Detailed Description of the Invention]

### [Technical Problem]

The disclosure proposes a method for operating wireless channel and time resources during Wi-Fi Aware communication in a cluster.

### [Technical Solution]

According to an embodiment of the disclosure, a method of operating an electronic device performing Wi-Fi aware communication may comprise transmitting a Bluetooth low energy (BLE) advertisement message and activating a Wi-Fi aware module of the electronic device, determining whether the electronic device is a first type Wi-Fi aware device or a second type Wi-Fi aware device, identifying a type of a cluster that the electronic device intends to join, and performing a discovery procedure based on the type of the electronic device and the type of the cluster.

According to an embodiment, the first type Wi-Fi aware device may be configured to perform a legacy Wi-Fi aware function that transmits a discovery beacon, a sync beacon, and a service discovery frame (SDF). According to an embodiment, the second type Wi-Fi aware device may be configured to perform the legacy Wi-Fi aware function and advanced Wi-Fi aware function, and the advanced Wi-Fi aware function may include unsynchronized service discovery (USD).

According to an embodiment, the type of the cluster may include a legacy Wi-Fi aware cluster and an advanced Wi-Fi aware cluster. The legacy Wi-Fi aware cluster may include at least one first type Wi-Fi aware device, and the advanced Wi-Fi aware cluster may include only second type Wi-Fi aware devices.

According to an embodiment of the disclosure, an electronic device performing Wi-Fi aware communication comprises a transceiver; and a controller. The controller may transmit a Bluetooth low energy (BLE) advertisement message and activate a Wi-Fi aware module of the electronic device, determine whether the electronic device is a first type Wi-Fi aware device or a second type Wi-Fi aware device, identify a type of a cluster that the electronic device intends to join, and perform a discovery procedure based on the type of the electronic device and the type of the cluster.

### [Advantageous Effects]

According to an embodiment of the disclosure, an electronic device may operate enhanced wireless channel and time resources during Wi-Fi aware communication.

According to an embodiment of the disclosure, an electronic device may operate wireless channel and time resources according to a device type.

### [Brief Description of Drawings]

FIG. 1 illustrates an example of device and service discovery of an electronic device.
FIG. 2 illustrates an example of various nodes included in a cluster.
FIG. 3 is a view illustrating an unsynchronized service discovery (USD) operation of electronic devices.
FIG. 4 is a view illustrating operations of electronic devices in a cluster according to an embodiment of the disclosure.
FIG. 5 is a view illustrating operations of electronic devices in a cluster in a Non-RSDB case according to an embodiment of the disclosure.
FIG. 6 is a view illustrating operations of electronic devices in a cluster in an RSDB case according to an embodiment of the disclosure.
FIG. 7 is a view illustrating operations of electronic devices in a cluster according to another embodiment of the disclosure.
FIG. 8 is a view illustrating operations of electronic devices in multiple clusters according to an embodiment of the disclosure.
FIG. 9 is a view illustrating operations of an electronic device (sender) in a single cluster according to an embodiment of the disclosure.
FIG. 10 is a view illustrating operations of an electronic device (sender) in multiple clusters according to an embodiment of the disclosure.
FIG. 11 is a view illustrating a structure of an electronic device (sender) according to an embodiment of the disclosure.
FIG. 12 is a view illustrating a structure of an electronic device (receiver) according to an embodiment of the disclosure.

### [Mode for Carrying out the Invention]

Hereinafter, embodiments of the present invention are described in detail with reference to the accompanying drawings.

In describing embodiments, the description of technologies that are known in the art and are not directly related to the present invention is omitted. This is for further clarifying the gist of the present disclosure without making it unclear.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims. The same reference numeral denotes the same element throughout the specification.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments of the disclosure, a "...unit" may include one or more processors.

As used herein, the term 'terminal' or 'device' may also be referred to as a mobile station (MS), user equipment (UE), user terminal (UT), terminal, wireless terminal, access terminal (AT), subscriber unit, subscriber station (SS), wireless device, wireless communication device, wireless transmit/receive unit (WTRU), mobile node, or mobile or may be referred to in other terms. Various embodiments of the terminal may include cellular phones, smart phones with wireless communication capabilities, personal digital assistants (PDAs) with wireless communication capabilities, wireless modems, portable computers with wireless communication capabilities, capturing/recording/shooting/filming devices, such as digital cameras, having wireless communication capabilities, game players with wireless communications capabilities, music storage and playback home appliances with wireless communications capabilities, Internet home appliances capable of wireless Internet access and browsing, or portable units or terminals incorporating combinations of those capabilities. Further, the terminal may include a machine to machine (M2M) terminal and a machine-type communication (MTC) terminal/device, but is not limited thereto. In the disclosure, the terminal may be referred to as an electronic device or simply as a device.

Wi-Fi CERTIFIED Wi-Fi Aware^{™} (Wi-Fi Aware) is a technology that extends the capabilities of Wi-Fi by enabling rapid discovery, connection, and data exchange with other Wi-Fi devices without the need for traditional network infrastructure, Internet connection, or GPS signals. Wi-Fi aware may provide the function of enabling a mutual search and direct connection between devices even without any other type of connection. Wi-Fi aware may also be referred to as neighbor awareness networking (NAN). A proximity service of the NAN specification may configure a collection of electronic devices named as a cluster.

Wi-Fi aware networking may work by forming a cluster with a peripheral device or by creating a new cluster if the device is the first device in the area. An application may communicate with a Wi-Fi aware system service that manages the device's Wi-Fi aware hardware using an application programming interface (Wi-Fi aware API). For example, a Wi-Fi aware network connection may support higher processing speeds over long distances where Bluetooth connections are not reachable. For example, the Wi-Fi aware network connection may be useful for applications that share large amounts of data between users, such as photo-sharing applications.

Bluetooth low energy (BLE) refers to a technology that operates at lower power than conventional Bluetooth (or Bluetooth classic) and may be used in electronic devices such as smart bands, watches, and beacons, for example.

Hereinafter, the operational principle of the disclosure is described below with reference to the accompanying drawings. When determined to make the subject matter of the disclosure unnecessarily unclear, the detailed description of known functions or configurations may be skipped in describing embodiments of the disclosure. The terms as used herein are defined considering the functions in the present disclosure and may be replaced with other terms according to the intention or practice of the user or operator. Therefore, the terms should be defined based on the overall disclosure.

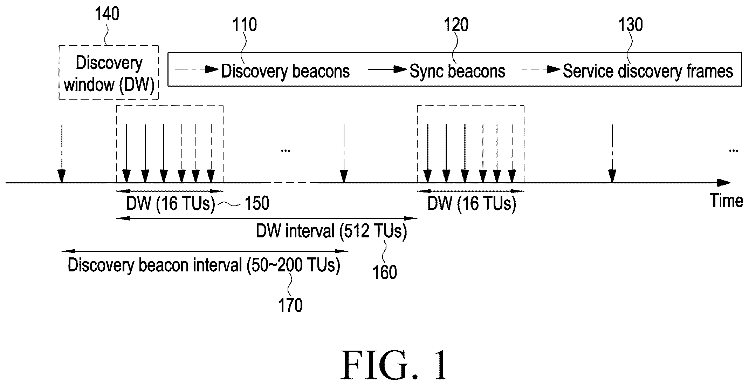

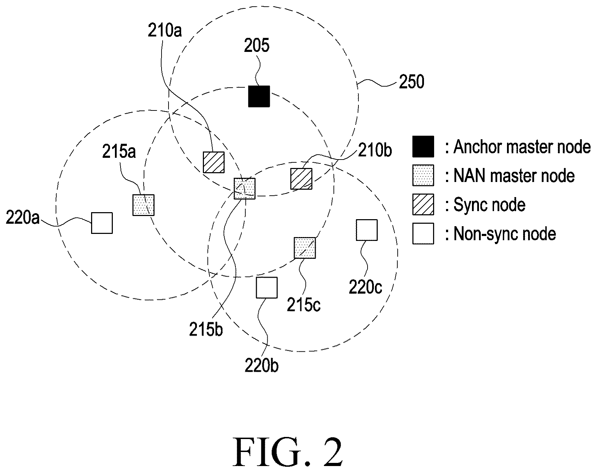

FIG. 1 and FIG. 2 show examples of legacy Wi-Fi operation and node configuration.

FIG. 1 illustrates an example of device and service discovery of an electronic device.

Referring to FIG. 1, at least one electronic device included in a cluster may transmit at least one discovery beacon 110 according to the NAN specification. The at least one electronic device may transmit at least one synchronization beacon 120 and/or at least one service discovery frame 130 within a discovery window (DW) 140 that occupies 16 time units (TU) according to the NAN specification.

According to an embodiment, the DW 140 may occupy 16 TUs, and a DW interval 160, which is a time interval between DWs 140, may occupy 512 TUs. According to an embodiment, a discovery beacon interval 170 indicating a transmission interval of the at least one discovery beacon 110 may occupy 50 to 200 TUs. A time during which an electronic device performs discovery may be dependent on the DW interval 160.

According to an embodiment, the at least one synchronization beacon 120 may be a signal for maintaining synchronization (e.g., time clock synchronization) between electronic devices included in a cluster. The at least one synchronization beacon 120 may include at least one piece of information accompanying synchronization between electronic devices.

For example, the at least one synchronization beacon 120 may include at least one of a frame control (FC) field indicating a function (e.g., beacon) of a signal, a broadcast address, a media access control (MAC) address of an electronic device that transmitted the at least one synchronization beacon 120, a cluster identifier, a sequence control field, a time stamp for a beacon frame, a beacon interval field indicating an interval between start times of synchronized communication sections, or capability information of an electronic device that transmitted the at least one synchronization beacon 120.

The at least one synchronization beacon 120 may include at least one information element related to at least one proximity network, and may include, e.g., service-related content that may be provided based on a proximity network. According to the NAN specification, the at least one synchronization beacon 120 may be transmitted by an electronic device defined as an anchor master device, a master device, or a non-master sync device among at least one electronic device in a cluster.

According to an embodiment, the at least one service discovery frame 130 may be a signal for advertising a service between at least one electronic device in a cluster and exchanging information related to the service based on a proximity network. According to the NAN specification, the at least one service discovery frame 130 is a vendor specific public action frame and may include various fields. For example, the at least one service discovery frame 130 may include at least one information element related to at least one proximity network.

According to an embodiment, the at least one electronic device may transmit the at least one discovery beacon 110 within a section other than a DW section 240. The at least one discovery beacon 110 may be a signal of a cluster advertisement function transmitted so that at least one electronic device that has not joined a cluster may discover the cluster.

According to an embodiment, at least one electronic device that has not joined a cluster may perform a passive scan to detect the at least one discovery beacon 110 transmitted from at least one electronic device participating in a cluster, thereby discovering the cluster and joining the cluster.

According to an embodiment, the at least one discovery beacon 110 may include at least one piece of information for synchronizing to a cluster. According to an embodiment, the discovery beacon 110 may include at least one of a frame control (FC) field indicating a function (e.g., beacon) of a signal, a broadcast address, a media access control (MAC) address of an electronic device that transmitted the at least one discovery beacon 110, a cluster identifier, a sequence control field, a time stamp for a beacon frame, a discovery beacon interval field indicating a transmission interval of the at least one discovery beacon 110, or capability information of an electronic device that transmitted the at least one discovery beacon 110. According to an embodiment, the at least one discovery beacon 110 may include at least one information element related to at least one proximity network.

FIG. 2 illustrates an example of various nodes included in a cluster.

Each of the nodes illustrated in FIG. 2 may be implemented as an electronic device (or Wi-Fi aware device). Referring to FIG. 2, each of the electronic devices may be classified as an anchor master node 205, NAN master nodes 215a, 215b, 215c, sync nodes 210a, 210b, or non-sync nodes 220a, 220b, 220c.

According to an embodiment, the anchor master node 205 may communicate with the sync nodes 210a, 210b and the NAN master node 215b within coverage through the discovery method of FIG. 1. According to an embodiment, the anchor master node 205 has constraints in direct communication with nodes positioned outside coverage and may communicate with nodes positioned outside coverage through hops via connections with other master nodes.

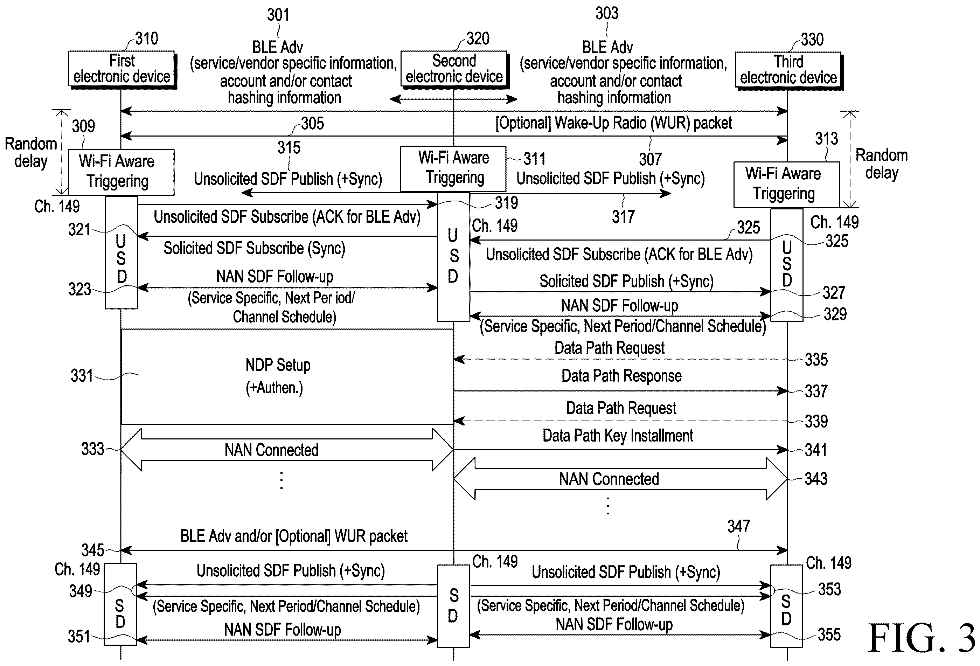

FIG. 3 is a view illustrating an unsynchronized service discovery (USD) operation of electronic devices.

Referring to FIG. 3, a first electronic device 310 may be a Wi-Fi aware device performing a receiver role, a second electronic device 320 may be a Wi-Fi aware device performing a sender role, and a third electronic device 330 may be a Wi-Fi aware device performing a receiver role.

In operation 301, the second electronic device 320 may transmit a BLE advertisement message including provided service information (e.g., Vendor/Service Specific information, account and/or contact hashing information) to the first electronic device 310. In operation 303, the second electronic device 320 may transmit a BLE advertisement message including provided service information (e.g., Vendor/Service Specific information, account and/or contact hashing information) to the third electronic device 330.

According to an embodiment, in operation 305, the second electronic device 320 may transmit a wake up radio (WUR) packet to the first electronic device 310. According to an embodiment, in operation 307, the second electronic device 320 may transmit a WUR packet to the third electronic device 330.

The second electronic device 320 may trigger a Wi-Fi aware interface (receiver) of another electronic device using an out of band (OOB) message (e.g., BLE advertisement message or WUR packet).

In operation 309, the first electronic device 310 may trigger a Wi-Fi aware interface within a random delay after receiving a BLE advertisement message or WUR packet from the second electronic device 320. In operation 311, the second electronic device 320 may trigger its own Wi-Fi aware interface after transmitting a BLE advertisement message or WUR packet. In operation 313, the third electronic device 330 may trigger a Wi-Fi aware interface within a random delay after receiving a BLE advertisement message or WUR packet from the second electronic device 320.

According to an embodiment, if the Wi-Fi aware interface of the second electronic device 320 is activated, the second electronic device 320 may wait for reception of a Response message through an OOB message. Further, the second electronic device 320 may wait for reception of an SDF subscribe message as an ACK for the OOB message.

The first electronic device 310 to the third electronic device 330 may support fast discovery among multiple devices by performing unsynchronized service discovery (USD) on a predesignated channel (e.g., channel 149) after triggering a Wi-Fi aware interface for each device.

According to an embodiment, in operations 315 and 317, the second electronic device 320 may transmit an unsolicited service discovery frame (SDF) publish message including synchronization (sync) information (sync). According to an embodiment, the synchronization information may include additional timing synchronization function (TSF) information for synchronization.

According to an embodiment, during a USD procedure on a predesignated channel (e.g., channel 149), in operation 319, the first electronic device 310 may transmit an unsolicited SDF subscribe message to the second electronic device 320 as an ACK for a BLE advertisement message. As an active subscriber, the first electronic device 310 may transmit an unsolicited SDF subscribe message without receiving a message from a publisher.

During the USD procedure, in operation 321, the second electronic device 320 may transmit a solicited SDF publish message including synchronization information (sync) to the first electronic device 310. The solicited SDF publish message may be a unicast message. According to an embodiment, the synchronization information may include additional timing synchronization function (TSF) information for synchronization. In operation 323, the first electronic device 310 and the second electronic device 320 may exchange NAN SDF Follow-up messages. According to an embodiment, the NAN SDF Follow-up message may be a service specific message and may include schedule information for a next period and/or channel.

According to an embodiment, during a USD procedure on a predesignated channel (e.g., channel 149), in operation 325, the third electronic device 330 may transmit an unsolicited SDF subscribe message to the second electronic device 320 as an ACK for a BLE advertisement message. As an active subscriber, the third electronic device 330 may transmit an unsolicited SDF subscribe message without receiving a message from a publisher.

During the USD procedure, in operation 327, the third electronic device 330 may transmit a solicited SDF publish message including synchronization information (sync) to the first electronic device 310. The solicited SDF publish message may be a unicast message. According to an embodiment, the synchronization information may include additional timing synchronization function (TSF) information for synchronization. In operation 329, the third electronic device 330 and the second electronic device 320 may exchange NAN SDF Follow-up messages. According to an embodiment, the NAN SDF Follow-up message may be a service specific message and may include schedule information for a next period and/or channel.

In operation 331, the first electronic device 310 and the second electronic device 320 may perform a NAN data path (NDP) setup procedure. The NDP setup procedure may include an authentication procedure. In operation 333, a NAN connection may be established between the first electronic device 310 and the second electronic device 320.

In operation 335, the third electronic device 330 transmits a Data Path Request message to the second electronic device 320 and, in operation 337, the third electronic device 330 may receive a Data Path Response message from the second electronic device 320. In operation 339, the third electronic device 330 transmits a Data Path Request message to the second electronic device 320 and, in operation 341, the third electronic device 330 may receive a Data Path Key Installment message from the second electronic device 320. In operation 343, a NAN connection may be established between the third electronic device 330 and the second electronic device 320.

In operation 345, the second electronic device 320 may transmit a BLE advertisement message and/or WUR packet to the first electronic device 310. In operation 347, the second electronic device 320 may transmit a BLE advertisement message and/or WUR packet to the third electronic device 330.

During a service discovery (SD) procedure on a predesignated channel (e.g., channel 149), in operation 349, the second electronic device 320 may transmit an unsolicited SDF publish message including synchronization information (sync) to the first electronic device 310. According to an embodiment, the synchronization information may include additional timing synchronization function (TSF) information for synchronization. In operation 351, the first electronic device 310 and the second electronic device 320 may exchange NAN SDF Follow-up messages.

During an SD procedure on a predesignated channel (e.g., channel 149), in operation 353, the second electronic device 320 may transmit an unsolicited SDF publish message including synchronization information (sync) to the third electronic device 330. According to an embodiment, the synchronization information may include additional timing synchronization function (TSF) information for synchronization. In operation 355, the third electronic device 330 and the second electronic device 320 may exchange NAN SDF Follow-up messages.

According to an embodiment, if an NDP is established, data may be transmitted between Wi-Fi aware devices included in a cluster. According to a specific service type, the next timing of a service discovery period, DW, and operating channel may be reserved by SDF publish/subscribe and NAN SDF follow-up messages.

In the disclosure, a Legacy Wi-Fi aware device means a device that performs device/service discovery illustrated in FIG. 1. A Legacy Wi-Fi aware device may transmit at least one of a discovery beacon, a sync beacon, and a service discovery frame (SDF). A Legacy Wi-Fi aware device may transmit at least one sync beacon and at least one service discovery frame within a discovery window (DW).

In the disclosure, an Advanced Wi-Fi aware device means a device capable of performing unsynchronized service discovery (USD) illustrated in FIG. 3. An Advanced Wi-Fi aware device may perform not only the USD illustrated in FIG. 3 but also device/service discovery illustrated in FIG. 1 like a Legacy Wi-Fi aware device. An Advanced Wi-Fi aware device may transmit a service discovery frame (SDF) message including synchronization information and/or a Follow-up message including synchronization information within a service discovery period (SDP). An Advanced Wi-Fi aware device may exchange synchronization information during a service discovery procedure. An Advanced Wi-Fi aware device may transmit or receive synchronization information piggyback on an SDF message.

The disclosure proposes coexistence and handling methods for Legacy Wi-Fi aware devices and/or Advanced Wi-Fi aware devices in a cluster in the following three cases (1) to (3).
(1) When only Advanced Wi-Fi aware devices are present in a cluster
   (1-1) Advanced Wi-Fi aware device newly enters a cluster
   (1-2) Legacy Wi-Fi aware device newly enters a cluster
(2) When only Legacy Wi-Fi aware devices are present in a cluster
   (2-1) Legacy Wi-Fi aware device newly enters a cluster
   (2-2) Advanced Wi-Fi aware device newly enters a cluster
(3) When Advanced Wi-Fi aware devices and legacy Wi-Fi aware devices coexist in a cluster
   (3-1) Legacy Wi-Fi aware device is master and Legacy Wi-Fi aware device newly enters a cluster
   (3-2) Legacy Wi-Fi aware device is master and Advanced Wi-Fi aware device newly enters a cluster
   (3-3) Advanced Wi-Fi aware device is master and Legacy Wi-Fi aware device newly enters a cluster
   (3-4) Advanced Wi-Fi aware device is master and Advanced Wi-Fi aware device newly enters a cluster

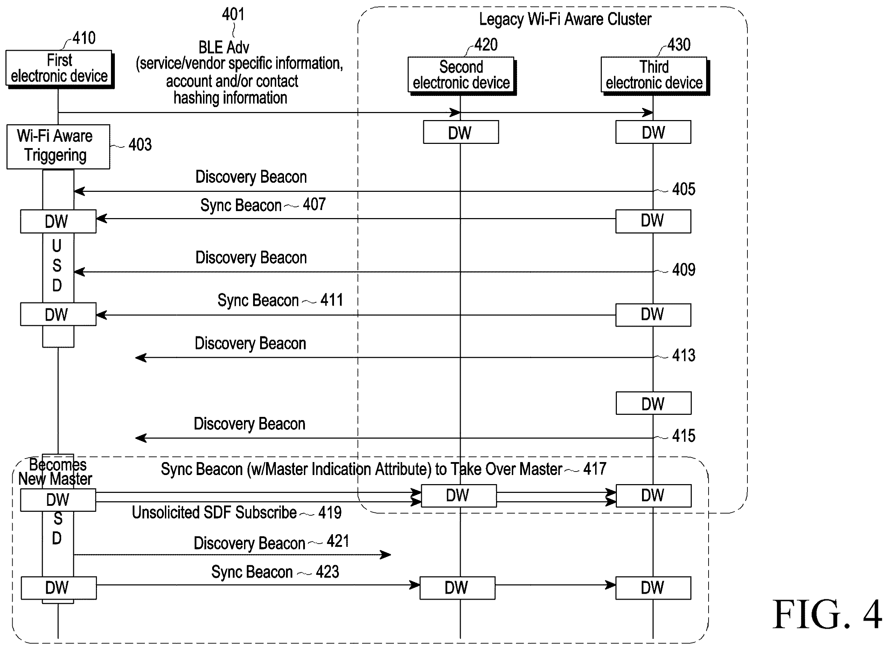

FIG. 4 is a view illustrating operations of electronic devices in a cluster according to an embodiment of the disclosure.

FIG. 4 illustrates operations when an Advanced Wi-Fi aware device newly enters the cluster in a case where only Legacy Wi-Fi aware devices are present in a cluster.

Referring to FIG. 4, a first electronic device 410 may be implemented as an Advanced Wi-Fi aware Sender device, and a second electronic device 420 and a third electronic device 430 belonging to one cluster (Legacy Wi-Fi aware Cluster) may be implemented as Legacy Wi-Fi aware Receiver devices. In the cluster (Legacy Wi-Fi aware Cluster), the second electronic device 420 may be a Non-Sync device performing a Non-Master role, and the third electronic device 430 may be a device performing a Master role.

In operation 401, the first electronic device 410 may transmit a BLE advertisement message including provided service information (e.g., Vendor/Service Specific information, account and/or contact hashing information) to the second electronic device 420 and/or the third electronic device 430. In operation 403, the first electronic device 410 may trigger a Wi-Fi aware interface (or NAN module) after transmitting a BLE advertisement message. The first electronic device 410 may obtain information (e.g., Vendor/Service Specific information, device type) about the second electronic device 420 and/or the third electronic device 430 through reception of a BLE Response message.

According to an embodiment, a Legacy Wi-Fi aware device may be periodically awake in a DW to exchange frames (e.g., synchronization beacon, SDF) for synchronization and service discovery. According to Wi-Fi aware specification Release 4, a Legacy Wi-Fi aware device may transmit discovery beacons at predefined value (e.g., 50-200TUs) intervals.

In operation 405, the third electronic device 430 may transmit a discovery beacon to the first electronic device 410. In operation 407, the third electronic device 430 may transmit a synchronization beacon to the first electronic device 410 within a configured discovery window (DW).

In operation 409, the third electronic device 430 may transmit a discovery beacon to the first electronic device 410. In operation 411, the third electronic device 430 may transmit a synchronization beacon to the first electronic device 410 within the configured DW.

In operations 413 and 415, after a service discovery period (SDP) of the first electronic device 410, the third electronic device 430 transmits a discovery beacon, but the first electronic device 410 may not receive the discovery beacon.

When only the second electronic device 430 and the third electronic device 430, which are Legacy Wi-Fi aware devices, are present in a cluster, the first electronic device 410 may operate to perform a Master role in the cluster.

In operation 417, for the first electronic device 410 to take over a Master role in a cluster, the first electronic device 410 may transmit a synchronization beacon including a Master indicator attribute to each of the second electronic device 430 and the third electronic device 430 within a DW and SDP of the first electronic device 410.

In operation 419, the first electronic device 410 may transmit an unsolicited SDF subscribe message to each of the second electronic device 430 and the third electronic device 430 within a DW and SDP.

In operation 421, the first electronic device 410 transmits a discovery beacon within an SDP, and each of the second electronic device 430 and the third electronic device 430 may not receive the discovery beacon. In operation 423, the first electronic device 410 may transmit a synchronization beacon to each of the second electronic device 430 and the third electronic device 430 within a DW and SDP.

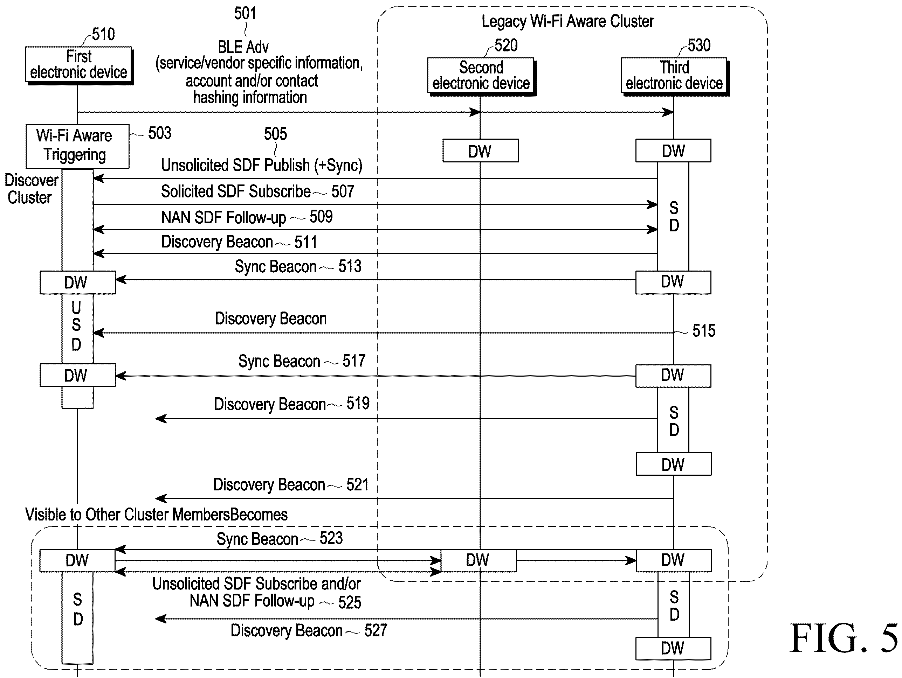

FIG. 5 is a view illustrating operations of electronic devices in a cluster in a Non-RSDB case according to an embodiment of the disclosure.

FIG. 5 illustrates operations when an Advanced Wi-Fi aware device newly enters the cluster in a Non-RSDB case where Legacy Wi-Fi aware devices and Advanced Wi-Fi aware devices coexist in a cluster.

Referring to FIG. 5, a first electronic device 510 may be implemented as an Advanced Wi-Fi aware sender device, a second electronic device 520 may be implemented as a Legacy Wi-Fi aware receiver device, and a third electronic device 530 may be implemented as an Advanced Wi-Fi aware receiver device. The second electronic device 520 and the third electronic device 530 may belong to one cluster (Legacy Wi-Fi aware Cluster). In the cluster (Legacy Wi-Fi aware Cluster), the second electronic device 520 may be a Non-Sync device performing a Non-Master role, and the third electronic device 530 may be a device performing a Master role.

In operation 501, the first electronic device 510 may transmit a BLE advertisement message including provided service information (e.g., Vendor/Service Specific information, account and/or contact hashing information) to the second electronic device 520 and/or the third electronic device 530. The first electronic device 510 may obtain information (e.g., Vendor/Service Specific information, device type) about the second electronic device 520 and/or the third electronic device 530 through reception of a BLE Response message.

In operation 503, the first electronic device 510 may trigger a Wi-Fi aware interface (or NAN module) after transmitting a BLE advertisement message.

In operation 505, the third electronic device 530 may transmit an unsolicited SDF publish message including synchronization information (sync) to the first electronic device 510 in an SDP. According to an embodiment, the synchronization information may include additional timing synchronization function (TSF) information for synchronization. In operation 507, the first electronic device 510 may transmit a solicited SDF subscribe message to the third electronic device 530 in an SDP.

In operation 509, the first electronic device 510 and the third electronic device 530 may exchange NAN SDF Follow-up messages in an SDP. According to an embodiment, the NAN SDF Follow-up message may be a service specific message and may include schedule information for a next period and/or channel.

In operation 511, the third electronic device 530 may transmit a discovery beacon to the first electronic device 510 in an SDP. In operation 513, the third electronic device 530 may transmit a synchronization beacon to the first electronic device 510 in a DW and SDP. In operation 515, the third electronic device 530 may transmit a discovery beacon to the first electronic device 510 in an SDP. In operation 517, the third electronic device 530 may transmit a synchronization beacon to the first electronic device 510 in a DW and SDP.

The first electronic device 510 may discover a cluster (Legacy Wi-Fi aware Cluster) through communication with the third electronic device 530. The first electronic device 510 may operate as a Legacy Wi-Fi aware device during a DW and may operate as an Advanced Wi-Fi aware device except for the DW.

In operations 519 and 521, after an SDP of the first electronic device 510, the third electronic device 530 transmits a discovery beacon, but the first electronic device 510 may not receive the discovery beacon.

In operation 523, the third electronic device 530 may transmit a synchronization beacon to the first electronic device 510. In operation 525, the first electronic device 510 and the second electronic device 520 may transmit/receive an unsolicited SDF subscribe message and/or NAN SDF Follow-up message. In operation 527, the third electronic device 530 may transmit a discovery beacon in an SDP section so that Legacy Wi-Fi aware devices existing in the vicinity may newly enter this cluster.

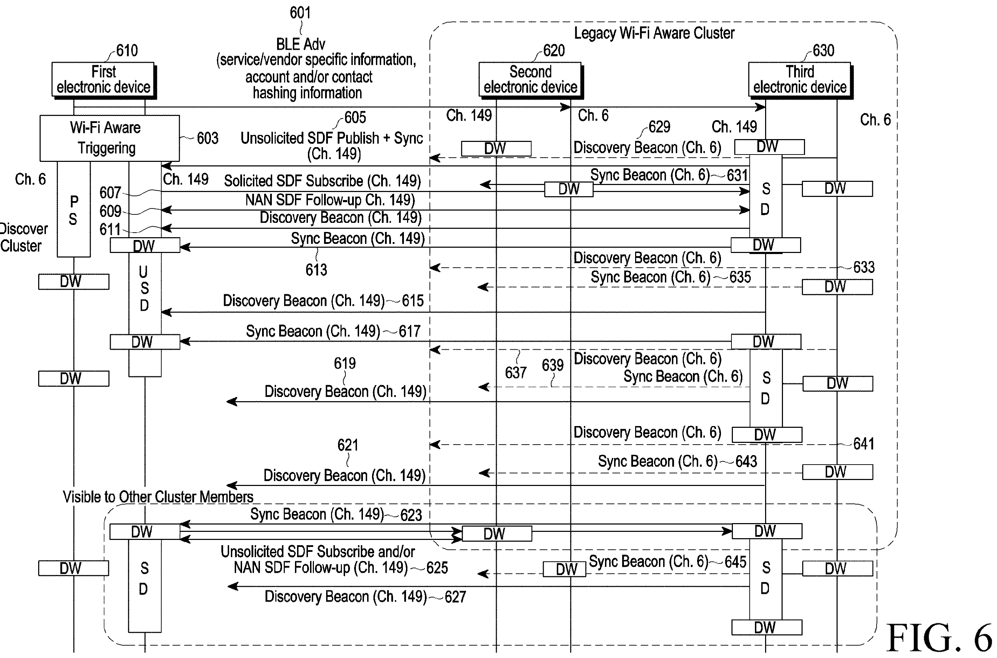

FIG. 6 is a view illustrating operations of electronic devices in a cluster in an RSDB case according to an embodiment of the disclosure.

FIG. 6 illustrates operations when an Advanced Wi-Fi aware device newly enters the cluster in an RSDB case where Legacy Wi-Fi aware devices and Advanced Wi-Fi aware devices coexist in a cluster.

Referring to FIG. 6, a first electronic device 610 may be implemented as an Advanced Wi-Fi aware sender device, a second electronic device 620 may be implemented as a Legacy Wi-Fi aware receiver device, and a third electronic device 630 may be implemented as an Advanced Wi-Fi aware receiver device. The second electronic device 620 and the third electronic device 630 may belong to one cluster (Legacy Wi-Fi aware Cluster). In the cluster (Legacy Wi-Fi aware Cluster), the second electronic device 620 may be a Non-Sync device performing a Non-Master role, and the third electronic device 630 may be a device performing a Master role.

The first electronic device 610 and the third electronic device 630 have an RSDB function and may operate as Legacy Wi-Fi aware devices during a DW at 2.4GHz (or ch.6). The first electronic device 610 and the third electronic device 630 have an RSDB function and may operate as Legacy Wi-Fi aware devices or Advanced Wi-Fi aware devices at 5GHz (or ch.149).

In operation 601, the first electronic device 610 may transmit a BLE advertisement message including provided service information (e.g., Vendor/Service Specific information, account and/or contact hashing information) to the second electronic device 620 and/or the third electronic device 630. The first electronic device 610 may obtain information (e.g., Vendor/Service Specific information, device type) about the second electronic device 620 and/or the third electronic device 630 through reception of a BLE Response message.

In operation 603, the first electronic device 610 may trigger a Wi-Fi aware interface (or NAN module) after transmitting a BLE advertisement message.

In operation 605, the third electronic device 630 may transmit an unsolicited SDF publish message including synchronization information (sync) to the first electronic device 610 in an SDP at 5GHz (or ch.149). According to an embodiment, the synchronization information may include additional timing synchronization function (TSF) information for synchronization. In operation 607, the first electronic device 610 may transmit a solicited SDF subscribe message to the third electronic device 630 in an SDP at 5GHz (or ch.149).

In operation 609, the first electronic device 610 and the third electronic device 630 may exchange NAN SDF Follow-up messages in an SDP at 5GHz (or ch.149). According to an embodiment, the NAN SDF Follow-up message may be a service specific message and may include schedule information for a next period and/or channel.

In operation 611, the third electronic device 630 may transmit a discovery beacon to the first electronic device 610 in an SDP at 5GHz (or ch.149). In operation 613, the third electronic device 630 may transmit a synchronization beacon to the first electronic device 610 in a DW and SDP at 5GHz (or ch.149). In operation 615, the third electronic device 630 may transmit a discovery beacon to the first electronic device 610 in an SDP at 5GHz (or ch.149). In operation 617, the third electronic device 630 may transmit a synchronization beacon to the first electronic device 610 in a DW and SDP at 5GHz (or ch.149).

The first electronic device 610 may discover a cluster (Legacy Wi-Fi aware Cluster) through communication with the third electronic device 630 at 5GHz (or ch.149).

In operations 619 and 621, after an SDP at 5GHz (or ch.149) of the first electronic device 610, the third electronic device 630 may transmit a discovery beacon so that Legacy Wi-Fi aware devices existing in the vicinity may newly enter this cluster.

In operation 623, the third electronic device 630 may transmit a synchronization beacon to the first electronic device 610 in a DW at 5GHz (or ch.149). In operation 625, the first electronic device 610 and the second electronic device 620 may transmit/receive an unsolicited SDF subscribe message and/or NAN SDF Follow-up message in a DW at 5GHz (or ch.149). In operation 627, the third electronic device 630 may transmit a discovery beacon in an SDP at 5GHz (or ch.149) so that Legacy Wi-Fi aware devices existing in the vicinity may newly enter this cluster.

The third electronic device 630 may operate as a legacy Wi-Fi aware device during a DW at 2.4GHz (or ch.6). In operation 629, the third electronic device 630 may transmit a discovery beacon to the first electronic device 610 and/or the second electronic device 620 at 2.4GHz (or ch.6). In operation 631, the third electronic device 630 may transmit a synchronization beacon to the first electronic device 610 and/or the second electronic device 620 in a DW at 2.4GHz (or ch.6).

In operation 633, the third electronic device 630 may transmit a discovery beacon to the first electronic device 610 and/or the second electronic device 620 at 2.4GHz (or ch.6). In operation 635, the third electronic device 630 may transmit a synchronization beacon to the first electronic device 610 and/or the second electronic device 620 in a DW at 2.4GHz (or ch.6).

In operation 637, the third electronic device 630 may transmit a discovery beacon to the first electronic device 610 and/or the second electronic device 620 at 2.4GHz (or ch.6). In operation 639, the third electronic device 630 may transmit a synchronization beacon to the first electronic device 610 and/or the second electronic device 620 in a DW at 2.4GHz (or ch.6).

In operation 641, the third electronic device 630 may transmit a discovery beacon to the first electronic device 610 and/or the second electronic device 620 at 2.4GHz (or ch.6). In operation 643, the third electronic device 630 may transmit a synchronization beacon to the first electronic device 610 and/or the second electronic device 620 in a DW at 2.4GHz (or ch.6).

In operation 645, the third electronic device 630 may transmit a synchronization beacon to the first electronic device 610 and/or the second electronic device 620 in a DW at 2.4GHz (or ch.6).

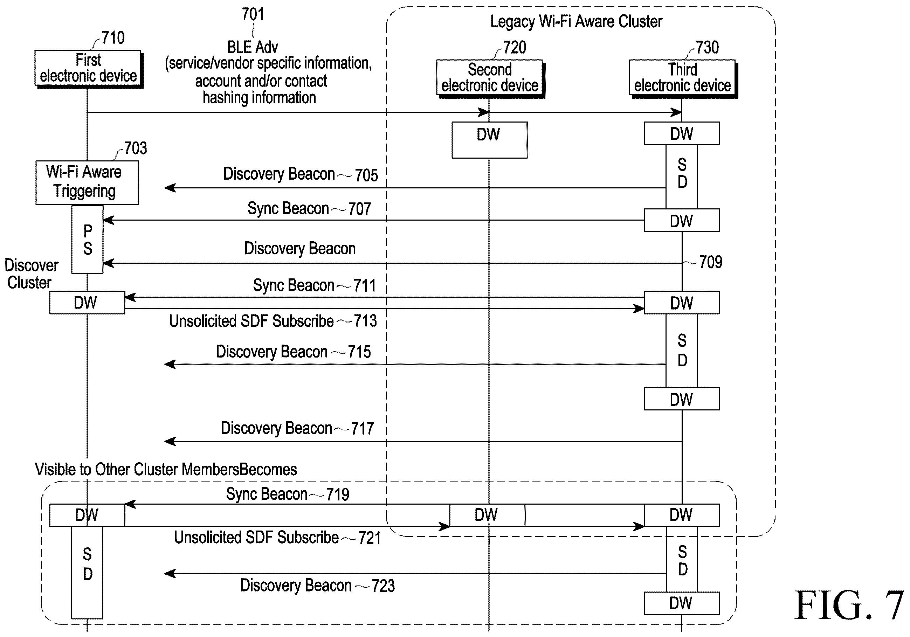

FIG. 7 is a view illustrating operations of electronic devices in a cluster according to another embodiment of the disclosure.

FIG. 7 illustrates operations when a Legacy Wi-Fi aware device newly enters the cluster in a case where Legacy Wi-Fi aware devices and Advanced Wi-Fi aware devices coexist in a cluster.

Referring to FIG. 7, a first electronic device 710 may be implemented as a Legacy Wi-Fi aware sender device, a second electronic device 720 may be implemented as a Legacy Wi-Fi aware receiver device, and a third electronic device 730 may be implemented as an Advanced Wi-Fi aware receiver device. The second electronic device 720 and the third electronic device 730 may belong to one cluster (Legacy Wi-Fi aware Cluster). In the cluster (Legacy Wi-Fi aware Cluster), the second electronic device 720 may be a Non-Sync device performing a Non-Master role, and the third electronic device 730 may be a device performing a Master role.

In operation 701, the first electronic device 710 may transmit a BLE advertisement message including provided service information (e.g., Vendor/Service Specific information, account and/or contact hashing information) to the second electronic device 720 and/or the third electronic device 730. The first electronic device 710 may obtain information (e.g., Vendor/Service Specific information, device type) about the second electronic device 720 and/or the third electronic device 730 through reception of a BLE Response message. In operation 703, the first electronic device 710 may trigger a Wi-Fi aware interface (or NAN module) after transmitting a BLE advertisement message.

According to an embodiment, the first electronic device 710, which is a Legacy Wi-Fi aware sender device, may discover a cluster (Legacy Wi-Fi aware Cluster) by receiving discovery beacons and/or synchronization beacons through a passive scan (PS) for a designated channel.

In operation 705, in a section other than a PS section of the first electronic device 710, the third electronic device 730 transmits a discovery beacon to the first electronic device 410, but the first electronic device 710 may not receive the discovery beacon. In operation 707, in a PS section of the first electronic device 710, the third electronic device 730 transmits a synchronization beacon to the first electronic device 410 within a configured discovery window (DW), but the first electronic device 710 may not receive the synchronization beacon.

In operation 709, in a PS section of the first electronic device 710, the third electronic device 730 may transmit a discovery beacon to the first electronic device 710. In operation 711, the third electronic device 730 may transmit a synchronization beacon to the first electronic device 710 within the configured DW. In operation 713, the first electronic device 710 may transmit an unsolicited SDF subscribe message to the third electronic device 730 within the DW.

In operations 715 and 717, after a PS section of the first electronic device 710, the third electronic device 730 transmits a discovery beacon, but the first electronic device 710 may not receive the discovery beacon.

In operation 719, the third electronic device 730 may transmit a synchronization beacon to the first electronic device 710 in a DW. In operation 721, the first electronic device 710 may transmit/receive an unsolicited SDF subscribe message to/from the second electronic device 720 and/or the third electronic device 730. In operation 723, the third electronic device 730 may transmit a discovery beacon in an SDP so that Legacy Wi-Fi aware devices existing in the vicinity may newly enter this cluster.

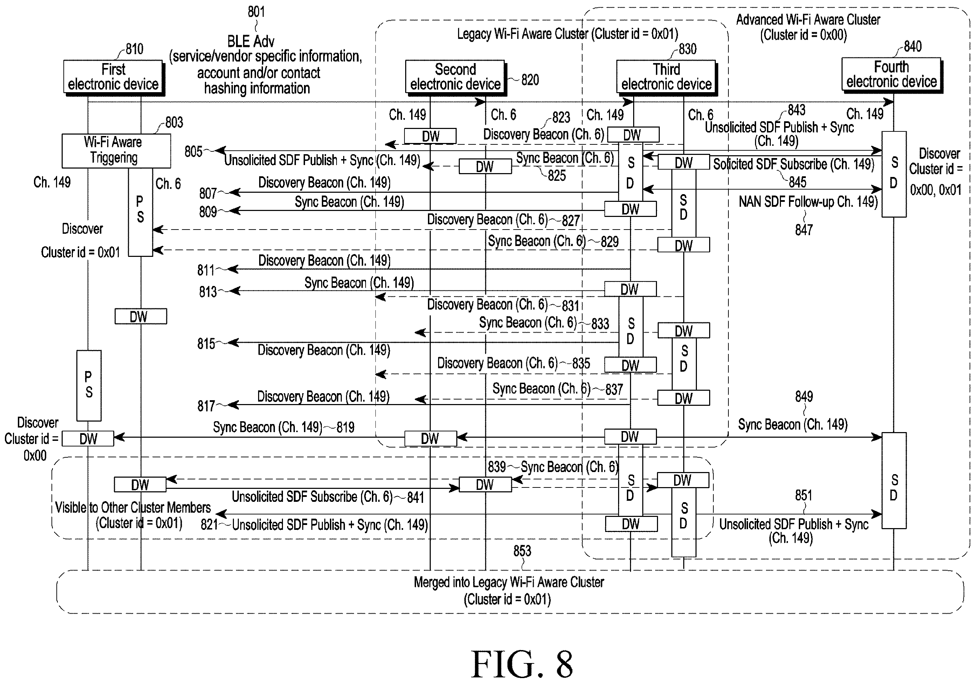

FIG. 8 is a view illustrating operations of electronic devices in multiple clusters according to an embodiment of the disclosure.

FIG. 8 illustrates operations when a Legacy Wi-Fi aware device newly enters the first cluster (Legacy Wi-Fi aware Cluster) in an RSDB case where Legacy Wi-Fi aware devices and Advanced Wi-Fi aware devices coexist in a first cluster (Legacy Wi-Fi aware Cluster). Simultaneously, FIG. 8 illustrates operations when a Legacy Wi-Fi aware device newly enters the second cluster (Advanced Wi-Fi aware Cluster) in an RSDB case where only Advanced Wi-Fi aware devices are present in a second cluster (Advanced Wi-Fi aware Cluster). In other words, FIG. 8 illustrates operations of a Legacy Wi-Fi aware device newly entering each of multiple clusters in an RSDB case. For example, the cluster ID of the first cluster (Legacy Wi-Fi aware Cluster) may be 0X01, and the cluster ID of the second cluster (Advanced Wi-Fi aware Cluster) may be 0X00.

Referring to FIG. 8, a first electronic device 810 may be implemented as a Legacy Wi-Fi aware sender device, a second electronic device 820 may be implemented as a Legacy Wi-Fi aware receiver device, a third electronic device 830 may be implemented as an Advanced Wi-Fi aware receiver device, and a fourth electronic device 840 may be implemented as an Advanced Wi-Fi aware receiver device.

The second electronic device 820 and the third electronic device 830 may belong to a first cluster (Legacy Wi-Fi aware Cluster). In the first cluster (Legacy Wi-Fi aware Cluster), the second electronic device 820 may be a Non-Sync device performing a Non-Master role, and the third electronic device 830 may be a device performing a Master role.

The third electronic device 830 and the fourth electronic device 840 may belong to a second cluster (Advanced Wi-Fi aware Cluster). In the second cluster (Advanced Wi-Fi aware Cluster), the third electronic device 830 may be a device performing a Master role, and the fourth electronic device 840 may be a Non-Sync device performing a Non-Master role.

The third electronic device 830 and the fourth electronic device 840 have an RSDB function and may operate as Legacy Wi-Fi aware devices during a DW at 2.4GHz (or ch.6). The third electronic device 830 and the fourth electronic device 840 have an RSDB function and may operate as Legacy Wi-Fi aware devices or Advanced Wi-Fi aware devices at 5GHz (or ch.149).

In operation 801, the first electronic device 810 may transmit a BLE advertisement message including provided service information (e.g., Vendor/Service Specific information, account and/or contact hashing information) to the second electronic device 820, the third electronic device 830, and/or the fourth electronic device 840. The first electronic device 810 may obtain information (e.g., Vendor/Service Specific information, device type) about the second electronic device 820 and/or the third electronic device 830 through reception of a BLE Response message. In operation 803, the first electronic device 810 may trigger a Wi-Fi aware interface (or NAN module) after transmitting a BLE advertisement message.

In operation 805, the third electronic device 830 may transmit an unsolicited SDF publish message including synchronization information (sync) to the first electronic device 810 in an SDP at 5GHz (or ch.149). According to an embodiment, the synchronization information may include additional timing synchronization function (TSF) information for synchronization. In operation 807, the third electronic device 830 may transmit a discovery beacon to the first electronic device 810 in an SDP at 5GHz (or ch.149). In operation 809, the third electronic device 830 may transmit a synchronization beacon to the first electronic device 810 in a DW at 5GHz (or ch.149). In operation 811, the third electronic device 830 may transmit a discovery beacon to the first electronic device 810 at 5GHz (or ch.149). In operation 813, the third electronic device 830 may transmit a synchronization beacon to the first electronic device 810 in a DW at 5GHz (or ch.149).

The first electronic device 810 may discover a first cluster (Legacy Wi-Fi aware Cluster) (e.g., cluster ID = 0X01) through communication with the third electronic device 830 at 5GHz (or ch.149).

In operations 815 and 817, the third electronic device 830 may transmit a discovery beacon to the first electronic device 610. In operation 819, the third electronic device 830 may transmit a synchronization beacon to the first electronic device 810 in a DW at 5GHz (or ch.149). The first electronic device 810 receiving the discovery beacon may discover a second cluster (Advanced Wi-Fi aware Cluster) (e.g., cluster ID = 0X00). In operation 821, the third electronic device 830 may transmit an unsolicited SDF subscribe message including synchronization information to the first electronic device 810 at 5GHz (or ch.149).

The third electronic device 830 may operate as a legacy Wi-Fi aware device during a DW at 2.4GHz (or ch.6). In operation 823, the third electronic device 830 may transmit a discovery beacon to the first electronic device 810 and/or the second electronic device 820 at 2.4GHz (or ch.6). In operation 825, the third electronic device 830 may transmit a synchronization beacon to the first electronic device 810 and/or the second electronic device 820 in a DW at 2.4GHz (or ch.6).

In operation 827, the third electronic device 830 may transmit a discovery beacon to the first electronic device 810 and/or the second electronic device 820 at 2.4GHz (or ch.6). In operation 829, the third electronic device 830 may transmit a synchronization beacon to the first electronic device 810 and/or the second electronic device 820 in a DW at 2.4GHz (or ch.6).

In operation 831, the third electronic device 830 may transmit a discovery beacon to the first electronic device 810 and/or the second electronic device 820 at 2.4GHz (or ch.6). In operation 833, the third electronic device 830 may transmit a synchronization beacon to the first electronic device 810 and/or the second electronic device 820 in a DW at 2.4GHz (or ch.6).

In operation 835, the third electronic device 830 may transmit a discovery beacon to the first electronic device 810 and/or the second electronic device 820 at 2.4GHz (or ch.6). In operation 837, the third electronic device 830 may transmit a synchronization beacon to the first electronic device 810 and/or the second electronic device 820 in a DW at 2.4GHz (or ch.6).

In operation 839, the third electronic device 830 may transmit a synchronization beacon to the first electronic device 810 and/or the second electronic device 820 in a DW at 2.4GHz (or ch.6). In operation 841, the first electronic device 810 may transmit an unsolicited subscribe message to the second electronic device 820 and/or the third electronic device 830 in a DW at 2.4GHz (or ch.6).

In operation 843, the third electronic device 830 may transmit an unsolicited SDF publish message including synchronization information (sync) to the fourth electronic device 840 in an SDP at 5GHz (or ch.149). According to an embodiment, the synchronization information may include additional timing synchronization function (TSF) information for synchronization. In operation 845, the third electronic device 830 may transmit a solicited SDF subscribe message to the fourth electronic device 840 in an SDP at 5GHz (or ch.149).

In operation 847, the third electronic device 830 and the fourth electronic device 840 may exchange NAN SDF Follow-up messages in an SDP at 5GHz (or ch.149). According to an embodiment, the NAN SDF Follow-up message may be a service specific message and may include schedule information for a next period and/or channel.

In operation 849, the third electronic device 830 may transmit a synchronization beacon to the fourth electronic device 840 at 5GHz (or ch.149). In operation 851, the third electronic device 830 may transmit an unsolicited SDF publish message including synchronization information (sync) to the fourth electronic device 840 in an SDP at 5GHz (or ch.149).

According to an embodiment, in operation 853, at least one of the first electronic device 810 to the fourth electronic device 840 may perform at least one operation configured to merge the first cluster (Legacy Wi-Fi aware Cluster) and the second cluster (Advanced Wi-Fi aware Cluster). According to an embodiment, the second cluster (Advanced Wi-Fi aware Cluster) may be merged into the first cluster (Legacy Wi-Fi aware Cluster). Thereafter, at least one of the first electronic device 810 to the fourth electronic device 840 may operate within the merged cluster (Legacy Wi-Fi aware Cluster).

According to an embodiment, without performing operation 853, at least one of the first electronic device 810 to the fourth electronic device 840 may operate within the first cluster (Legacy Wi-Fi aware Cluster) and the second cluster (Advanced Wi-Fi aware Cluster).

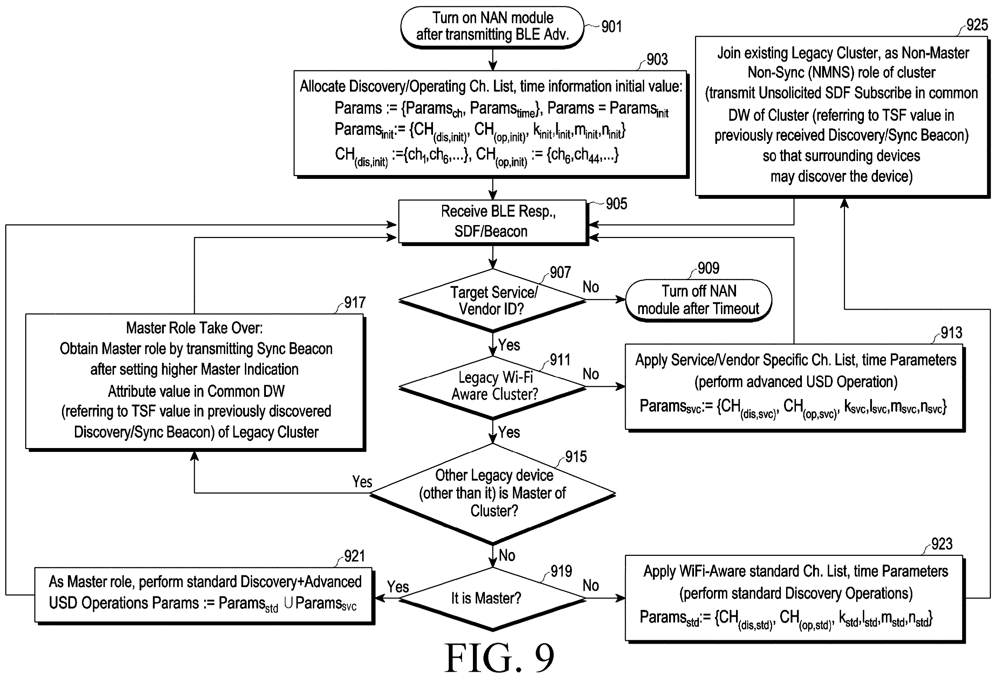

FIG. 9 is a view illustrating operations of an electronic device (sender) in a single cluster according to an embodiment of the disclosure.

In FIG. 9, an electronic device (sender) operating in a single cluster may be implemented as an Advanced Wi-Fi aware Sender device.

In operation 901, the electronic device (sender) may transmit a BLE advertisement message and activate (on) a NAN module (or Wi-Fi aware interface).

In operation 903, the electronic device (sender) may allocate discovery/operating channel list and/or time information initial values based on Equation 1.$\begin{matrix}Params : = \left\{{Params}_{ch}, {Params}_{time}\right\} , Params = {Params}_{init} \\ {Params}_{init} : = \left\{{CH}_{\left(dis, init\right)}, {CH}_{\left(op, init\right)}, {k}_{init}, {l}_{init}, {m}_{init}, {n}_{init}\right\} \\ {CH}_{\left(dis, init\right)} : = \left\{{ch}_{1}, {ch}_{6}, ⋯\right\} . {CH}_{\left(op, init\right)} : = \left\{{ch}_{6}, {ch}_{44}, ⋯\right\}\end{matrix}$

Here, Params means a parameter set composed of channel and time parameters, and **Params_{ch} := {CH_{dis}, CHₒₚ), Paramsₜᵢₘₑ := {*k, l, m*, *n* }** may be set. Here, CH_{dis} means a NAN discovery channel set, and CH_{OP} means a channel set for NAN data path operation. k means SDP duration (in TU units), l means SDP interval, m means DW duration, and n means DW interval.

In operation 905, the electronic device (sender) may receive at least one of a BLE response message, SDF message/beacon. In operation 907, the electronic device (sender) may identify whether it is a target service/vendor ID.

If it is not a target service/vendor ID (907-No), in operation 909, the electronic device (sender) may deactivate (off) the NAN module after timeout.

If it is a target service/vendor ID (907-Yes), in operation 911, the electronic device (sender) may identify whether a related cluster is a Legacy Wi-Fi aware cluster. According to an embodiment, a Legacy Wi-Fi aware cluster may be a cluster including at least one Legacy Wi-Fi aware device.

If it is not a Legacy Wi-Fi aware cluster (911-No), in operation 913, the electronic device (sender) may apply a service/vendor specific channel list and time parameters (perform advanced USD operation).

According to an embodiment, a set Params_{SVC} of Service/Vendor Specific channel and time parameters in an advanced USD operation may be set according to Equation 2. ${Params}_{svc} : = \left\{{CH}_{\left(dis, svc\right)}, {CH}_{\left(op, svc\right)}, {k}_{svc}, {m}_{svc}, {l}_{svc}, {n}_{svc}\right\}$

Here, CH_{dis,SVC} means a NAN discovery channel set, and CH_{OP,SVC} means a channel set for NAN data path operation. k_{SVC} means SDP duration (in TU units), lsvc means SDP interval, m_{SVC} means DW duration, and n_{SVC} means DW interval.

If it is a Legacy Wi-Fi aware cluster (911-Yes), in operation 915, the electronic device (sender) may identify whether another Legacy Wi-Fi aware device is a Master of the cluster.

If another Legacy Wi-Fi aware device is a Master of the cluster (915-Yes), in operation 917, the electronic device (sender) may control to take over a Master role from another Legacy Wi-Fi aware device (master role take over). According to an embodiment, the electronic device (sender) may obtain a Master role by transmitting a synchronization beacon after setting a Master Indication Attribute to a value higher than a threshold in a Common DW (referring to a TSF value in the previously received discovery/synchronization beacon) of the Legacy Wi-Fi aware cluster.

If another Legacy Wi-Fi aware device is not a Master of the cluster (915-No), in operation 919, the electronic device (sender) may identify whether it is a Master.

If the electronic device (sender) is a Master (919-Yes), in operation 921, the electronic device (sender) may perform standard discovery operation and Advanced USD operation as a Master role. According to an embodiment, in operation 921, a parameter set (Params) composed of channel and time parameters may be configured as in Equation 3. $Params : = {Params}_{std} ∪ {Params}_{svc}$

Here, Params_{std} may be a parameter set composed of channel and time parameters in a standard discovery operation.

If the electronic device (sender) is not a Master (919-No), in operation 923, the electronic device (sender) may apply Wi-Fi aware standard channel list and time parameters (perform standard discovery operation).

According to an embodiment, a set Params_{std} of channel and time parameters in a standard discovery operation may be set according to Equation 4. ${Params}_{std} : = \left\{{CH}_{\left(dis, std\right)}, {CH}_{\left(op, std\right)}, {k}_{std}, {m}_{std}, {l}_{std}, {n}_{std}\right\}$

Here, CH_{dis,std} means a standard-compliant NAN discovery channel set, and CH_{OP,std} means a standard-compliant channel set for NAN data path operation. k_{std} means SDP duration (in TU units), l_{std} means SDP interval, m_{std} means DW duration, and n_{std} means DW interval.

In operation 925, the electronic device (sender) may join an existing Legacy Wi-Fi aware Cluster as a Non-Master Non-Sync (NMNS) role of the cluster. According to an embodiment, the electronic device (sender) may transmit an unsolicited SDF subscribe message in a common DW (referring to a TSF value in the previously received discovery/synchronization beacon) of the cluster so that surrounding devices may discover itself.

According to an embodiment, if one of operations 913, 917, 921, and 925 is completed, the electronic device (sender) may perform operation 905 again.

Table 1 describes attributes included in each of SDF Publish/Subscribe messages, SDF Follow-up messages, Synchronization Beacons, and Discovery beacons according to embodiments of the disclosure.

**[Table 1] present disclosure**

| Attributes | Roles and Primary field | SDF Publish/Subscribe | | SDF Fo llow-up | | Synchronization Beacon | | Discovery beacon | |
|---|---|---|---|---|---|---|---|---|---|
| | | Wi-Fi Aware Standard R4 | invention | Wi-Fi Aware Standard R4 | invention | Wi-Fi Aware Standard R4 | invention | Wi-Fi Aware Standard R4 | invention |
| Master indication attribute | Master preference | No | Included | No | Included | Mandatory | Included | Mandatory | Included |
| Cluster attribute | | No | Included | No | Included | Mandatory | Included | Mandatory | Included |
| Service ID List attribute | | No | Included | No | Included | Optional | Included | Optional | Optional |
| Subscribe Service ID List attri bute | | Mandatory | Included | Mandatory | Included | Optional | Included | Optional | Optional |
| NAN availability attribute | Time Bitmap (Scheduling) | Mandatory | Included | Optional | Included | Optional | Included | Optional | Included |
| Vendor Specific attribute | | Optional | Included | Optional | Included | Optional | Included | Optional | Optional |

Referring to Table 1, the SDF Publish/Subscribe message of the disclosure may further include a Master indication attribute, a Cluster attribute, and a Service ID List attribute
compared to Wi-Fi aware Standard R4.

The SDF Follow-up message of the disclosure may further include a Master indication attribute, a Cluster attribute, a Service ID List attribute, a NAN availability attribute, and a Vendor Specific attribute compared to Wi-Fi aware Standard R4.

The Synchronization Beacon of the disclosure may further include a Service ID List attribute, a Subscribe Service ID List attribute, a NAN availability attribute, and a Vendor Specific attribute compared to Wi-Fi aware Standard R4.

The Discovery beacon of the disclosure may further include a NAN availability attribute compared to Wi-Fi aware Standard R4.

The SDF Publish/Subscribe, SDF Follow-up, Synchronization beacon, and Discovery beacon of the disclosure may further include attributes defined in Wi-Fi aware Standard R4 in addition to the attributes designated in Table 1.

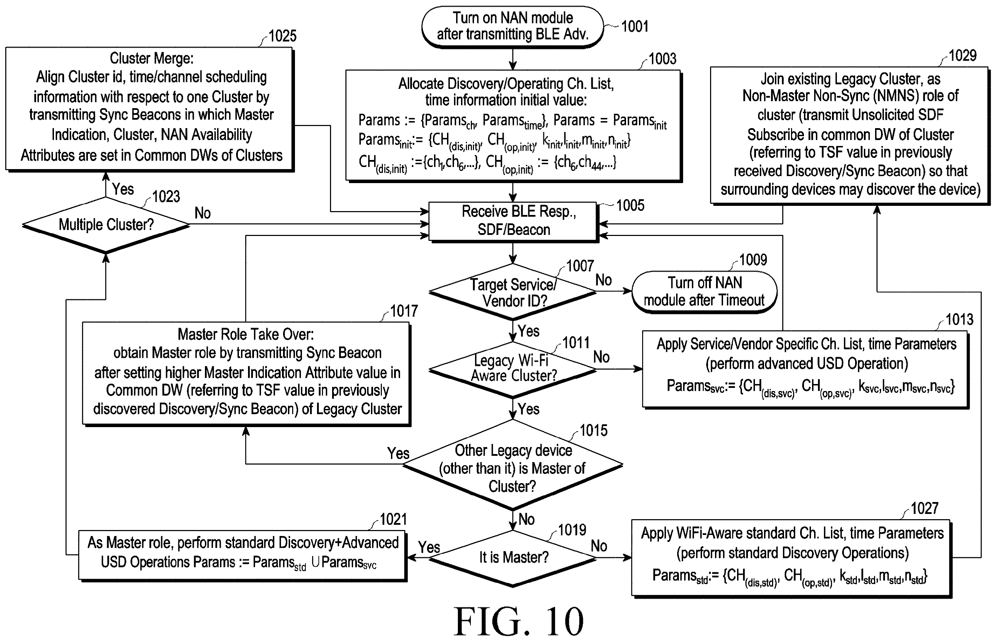

FIG. 10 is a view illustrating operations of an electronic device (sender) in multiple clusters according to an embodiment of the disclosure.

In FIG. 10, an electronic device (sender) operating in multiple clusters may be implemented as an Advanced Wi-Fi aware Sender device.

In operation 1001, the electronic device (sender) may transmit a BLE advertisement message and activate (on) a NAN module (or Wi-Fi aware interface).

In operation 1003, the electronic device (sender) may allocate discovery/operating channel list and/or time information initial values based on the Equation 1.

In operation 1005, the electronic device (sender) may receive at least one of a BLE response message, SDF message/beacon. In operation 1007, the electronic device (sender) may identify whether it is a target service/vendor ID.

If it is not a target service/vendor ID (1007-No), in operation 1009, the electronic device (sender) may deactivate (off) the NAN module after timeout.

If it is a target service/vendor ID (1007-Yes), in operation 1011, the electronic device (sender) may identify whether a related cluster is a Legacy Wi-Fi aware cluster. According to an embodiment, a Legacy Wi-Fi aware cluster may be a cluster including at least one Legacy Wi-Fi aware device.

If it is not a Legacy Wi-Fi aware cluster (1011-No), in operation 1013, the electronic device (sender) may apply a service/vendor specific channel list and time parameters (perform advanced USD operation).

According to an embodiment, a set Params_{SVC} of channel and time parameters in an advanced USD operation may be set according to the Equation 2.

If it is a Legacy Wi-Fi aware cluster (1011-Yes), in operation 1015, the electronic device (sender) may identify whether another Legacy Wi-Fi aware device is a Master of the cluster.

If another Legacy Wi-Fi aware device is a Master of the cluster (1015-Yes), in operation 1017, the electronic device (sender) may control to take over a Master role from another Legacy Wi-Fi aware device (master role take over). According to an embodiment, the electronic device (sender) may obtain a Master role by transmitting a synchronization beacon after setting a Master Indication Attribute to a value higher than a threshold in a Common DW (referring to a TSF value in the previously received discovery/synchronization beacon) of the Legacy Wi-Fi aware cluster.

If another Legacy Wi-Fi aware device is not a Master of the cluster (1015-No), in operation 1019, the electronic device (sender) may identify whether it is a Master.

If the electronic device (sender) is a Master (1019-Yes), in operation 1021, the electronic device (sender) may perform standard discovery operation and Advanced USD operation as a Master role. According to an embodiment, in operation 1021, a parameter set (Params) composed of channel and time parameters may be configured as in the Equation 3.

In operation 1023, the electronic device (sender) may identify whether multiple clusters operate. If multiple clusters operate (1023-Yes), in operation 1025, the electronic device (sender) may perform an operation for cluster merge. According to an embodiment, the electronic device (sender) may set at least one of Master Indication, Cluster, and NAN Availability Attributes and transmit a synchronization beacon in Common DWs of clusters, and may align cluster ID and time/channel scheduling information with respect to one cluster (alignment). According to an embodiment, the electronic device (sender) may determine to maintain each cluster without performing operation 1025.

If multiple clusters do not operate (1023-No), the electronic device (sender) may perform operation 1005 again.

If the electronic device (sender) is not a Master (1019-No), in operation 1027, the electronic device (sender) may apply Wi-Fi aware standard channel list and time parameters (perform standard discovery operation).

According to an embodiment, a set Params_{std} of channel and time parameters in a standard discovery operation may be set according to Equation 4 above.

In operation 1029, the electronic device (sender) may join an existing Legacy Wi-Fi aware Cluster as a Non-Master Non-Sync (NMNS) role of the cluster. According to an embodiment, the electronic device (sender) may transmit an unsolicited SDF subscribe message in a common DW (referring to a TSF value in the previously received discovery/synchronization beacon) of the cluster so that surrounding devices may discover itself.

According to an embodiment, if one of operations 1013, 1017, 1025, and 1029 is completed, the electronic device (sender) may perform operation 1005 again.

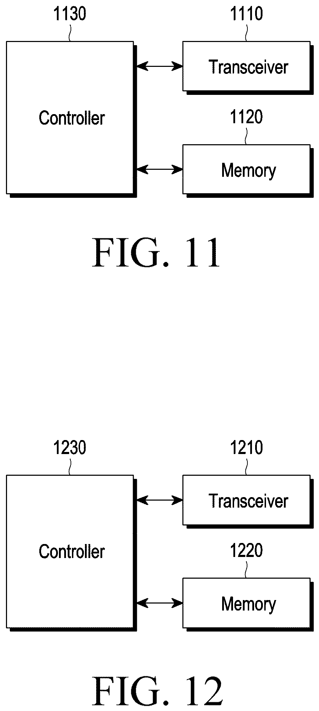

FIG. 11 is a view illustrating a structure of an electronic device (sender) according to an embodiment of the disclosure. The electronic device (sender) of FIG. 11 may be implemented as an electronic device or Wi-Fi aware device performing a sender role illustrated in FIG. 1 to FIG. 10.

Referring to FIG. 11, the electronic device may include a transceiver 1110, a controller 1120, and a storage unit 1130. In the disclosure, the controller may be defined as a circuit or application-specific integrated circuit or at least one processor.

The transceiver 1110 may transmit and receive a signal to and from an external electronic device.

The controller 1120 may control the overall operation of the electronic device (sender) according to the embodiment proposed in the disclosure. For example, the controller 1120 may control inter-block signal flow to perform the operations according to the above-described flowchart. Specifically, a controller 1120 may control, e.g., operations of the electronic device (sender) illustrated in FIG. 1 to FIG. 10.

The storage unit 1130 may store at least one of information transmitted/received via the transceiver 1110 and information generated via the controller 1120.

According to an embodiment, the controller 1120 may transmit a Bluetooth low energy (BLE) advertisement message and activate a Wi-Fi aware module of the electronic device. According to an embodiment, the controller 1120 may determine whether the electronic device is a first type Wi-Fi aware device or a second type Wi-Fi aware device, and identify a type of a cluster that the electronic device intends to join. According to an embodiment, the controller 1120 may perform a discovery procedure based on the type of the electronic device and the type of the cluster.

According to an embodiment, the first type Wi-Fi aware device may be configured to perform a legacy Wi-Fi aware function that transmits a discovery beacon, a sync beacon, and a service discovery frame (SDF).

According to an embodiment, the second type Wi-Fi aware device may be configured to perform the legacy Wi-Fi aware function and advanced Wi-Fi aware function, and the advanced Wi-Fi aware function may include unsynchronized service discovery (USD).

According to an embodiment, the type of the cluster may include a legacy Wi-Fi aware cluster and an advanced Wi-Fi aware cluster. The legacy Wi-Fi aware cluster may include at least one first type Wi-Fi aware device, and the advanced Wi-Fi aware cluster may include only second type Wi-Fi aware devices.

According to an embodiment, when the electronic device is the second type Wi-Fi aware device and the cluster includes only the first type Wi-Fi aware device, the controller 1120 may transmit a sync beacon including a master indication attribute.

According to an embodiment, when the electronic device is the second type Wi-Fi aware device and the cluster includes an external electronic device that is the second type Wi-Fi aware device, the controller 1120 may receive an unsolicited service discovery frame (SDF) publish message including synchronization information from the external electronic device. According to an embodiment, the controller 1120 may transmit an unsolicited service discovery frame (SDF) subscribe message to the external electronic device in response to the unsolicited service discovery frame (SDF) publish message.

According to an embodiment, the electronic device may be the second type Wi-Fi aware device supporting real-time simultaneous dual band (RSDB) function. The electronic device may operate based on the legacy Wi-Fi aware function during a discovery window (DW) on a first channel, and the electronic device may operate based on the legacy Wi-Fi aware function and the advanced Wi-Fi aware function on a second channel.

According to an embodiment, when the electronic device joins a first cluster that is the legacy Wi-Fi aware cluster and a second cluster that is the advanced Wi-Fi aware cluster, the second cluster may be merged into the first cluster.

FIG. 12 is a view illustrating a structure of an electronic device (receiver) according to an embodiment of the disclosure. The electronic device (receiver) of FIG. 12 may be implemented as an electronic device or Wi-Fi aware device performing a receiver role illustrated in FIG. 1 to FIG. 10.

Referring to FIG. 12, the electronic device may include a transceiver 1210, a controller 1220, and a storage unit 1230. In the disclosure, the controller may be defined as a circuit, an application-specific integrated circuit, or at least one processor.

The transceiver 1210 may transmit and receive a signal to and from an external electronic device.

The controller 1220 may control the overall operation of the electronic device according to an embodiment. For example, the controller 1220 may control inter-block signal flow to perform the operations according to the above-described flowchart. Specifically, a controller 1220 may control, e.g., operations of the electronic device (receiver) illustrated in FIG. 1 to FIG. 10.

The storage unit 1230 may store at least one of information transmitted/received via the transceiver 1210 and information generated via the controller 1220.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Meanwhile, although specific embodiments of the present disclosure have been described above, various changes may be made thereto without departing from the scope of the present disclosure. Thus, the scope of the present invention should not be limited to the above-described embodiments, and should rather be defined by the following claims and equivalents thereof.

## Claims

1. A method of operating an electronic device performing Wi-Fi aware communication, the method comprising:
transmitting a Bluetooth low energy (BLE) advertisement message and activating a Wi-Fi aware module of the electronic device;
determining whether the electronic device is a first type Wi-Fi aware device or a second type Wi-Fi aware device;
identifying a type of a cluster that the electronic device intends to join; and
performing a discovery procedure based on the type of the electronic device and the type of the cluster.

2. The method of claim 1, wherein the first type Wi-Fi aware device is configured to perform a legacy Wi-Fi aware function that transmits a discovery beacon, a sync beacon, and a service discovery frame (SDF), and
wherein the second type Wi-Fi aware device is configured to perform the legacy Wi-Fi aware function and advanced Wi-Fi aware function, and wherein the advanced Wi-Fi aware function includes unsynchronized service discovery (USD).

3. The method of claim 2, wherein the type of the cluster includes a legacy Wi-Fi aware cluster and an advanced Wi-Fi aware cluster,
wherein the legacy Wi-Fi aware cluster includes at least one first type Wi-Fi aware device, and
wherein the advanced Wi-Fi aware cluster includes only second type Wi-Fi aware devices.

4. The method of claim 3, further comprising, when the electronic device is the second type Wi-Fi aware device and the cluster includes only the first type Wi-Fi aware device, transmitting a sync beacon including a master indication attribute.

5. The method of claim 3, further comprising, when the electronic device is the second type Wi-Fi aware device and the cluster includes an external electronic device that is the second type Wi-Fi aware device, receiving an unsolicited service discovery frame (SDF) publish message including synchronization information from the external electronic device.

6. The method of claim 5, further comprising transmitting an unsolicited SDF subscribe message to the external electronic device in response to the unsolicited SDF publish message.

7. The method of claim 3, wherein the electronic device is the second type Wi-Fi aware device supporting a real-time simultaneous dual band (RSDB) function.

8. The method of claim 7, wherein the electronic device operates based on the legacy Wi-Fi aware function during a discovery window (DW) on a first channel, and
wherein the electronic device operates based on the legacy Wi-Fi aware function and the advanced Wi-Fi aware function on a second channel.

9. The method of claim 3, wherein when the electronic device joins a first cluster that is the legacy Wi-Fi aware cluster and a second cluster that is the advanced Wi-Fi aware cluster, the second cluster is merged into the first cluster.

10. The method of claim 1, wherein an SDF message transmitted during the discovery procedure includes a master indication attribute, a cluster attribute, and a service ID list attribute.

11. An electronic device performing Wi-Fi aware communication, the electronic device comprising:
a transceiver; and
a controller, wherein the controller is configured to:
transmit a Bluetooth low energy (BLE) advertisement message and activate a Wi-Fi aware module of the electronic device;
determine whether the electronic device is a first type Wi-Fi aware device or a second type Wi-Fi aware device;
identify a type of a cluster that the electronic device intends to join; and
perform a discovery procedure based on the type of the electronic device and the type of the cluster.

12. The electronic device of claim 11, wherein the first type Wi-Fi aware device is configured to perform a legacy Wi-Fi aware function that transmits a discovery beacon, a sync beacon, and a service discovery frame (SDF), and
wherein the second type Wi-Fi aware device is configured to perform the legacy Wi-Fi aware function and advanced Wi-Fi aware function, and wherein the advanced Wi-Fi aware function includes unsynchronized service discovery (USD).

13. The electronic device of claim 12, wherein the type of the cluster includes a legacy Wi-Fi aware cluster and an advanced Wi-Fi aware cluster,
wherein the legacy Wi-Fi aware cluster includes at least one first type Wi-Fi aware device, and
wherein the advanced Wi-Fi aware cluster includes only second type Wi-Fi aware devices.

14. The electronic device of claim 13, wherein the controller is configured to, when the electronic device is the second type Wi-Fi aware device and the cluster includes only the first type Wi-Fi aware device, transmit a sync beacon including a master indication attribute.

15. The electronic device of claim 13, wherein the controller is configured to, when the electronic device is the second type Wi-Fi aware device and the cluster includes an external electronic device that is the second type Wi-Fi aware device, receive an unsolicited service discovery frame (SDF) publish message including synchronization information from the external electronic device.
